# EUROPÄISCHE PATENTSCHRIFT

(11) **EP 4 325 308 B1**
(45) Veröffentlichungstag und Bekanntmachung des Hinweises auf die Patenterteilung: **11.09.2024**
(21) Anmeldenummer: 23184378.0
(22) Anmeldetag: 10.07.2023
(51) Int. Cl.: G05B 19/05, G05B 9/02, F16P 3/14

(54) **SICHERHEITSSYSTEM UND VERFAHREN MIT EINEM SICHERHEITSSYSTEM**
SECURITY SYSTEM AND METHOD WITH A SECURITY SYSTEM
SYSTÈME ET PROCÉDÉ DE SÉCURITÉ COMPRENANT UN SYSTÈME DE SÉCURITÉ

(30) Priorität: 18.08.2022 DE 102022120850
(43) Veröffentlichungstag der Anmeldung: 21.02.2024
(73) Patentinhaber: SICK AG, 79183 Waldkirch (DE)
(72) Erfinder: Hammes, Dr. Markus, 79117 Freiburg (DE); Mayer, Dr. Nikolaus, 79110 Freiburg (DE)

(56) Entgegenhaltungen:
- EP-B1- 1 928 091
- EP-B1- 3 709 106
- DE-A1- 102018 107 448
- US-A1- 2020 150 637
- US-A1- 2022 244 995

## Beschreibung

Die vorliegende Erfindung betrifft ein Sicherheitssystem gemäß dem Oberbegriff von Anspruch 1 und ein Verfahren mit einem Sicherheitssystem gemäß dem Oberbegriff von Anspruch 11.

Funktionale Sicherheit bezeichnet den Teil der Sicherheit eines Systems, der von der korrekten Funktion des sicherheitsbezogenen Systems und anderer risikomindernder Maßnahmen abhängt.

Da Sicherheit auch erreicht werden kann, indem die bestimmungsgemäße Funktion eingestellt und ein sicherer Zustand eingenommen wird, spricht man auch von der Sicherheitsintegrität des Systems.

Entsprechend fordert die Normenreihe IEC 61508 "Funktionale Sicherheit sicherheitsbezogener elektrischer/elektronischer/programmierbar elektronischer Systeme" die Anwendung diverser Methoden zur Beherrschung von Fehlern:
- Vermeidung systematischer Fehler in der Entwicklung, z. B. Spezifikations- und Implementierungsfehler;
- Überwachung im laufenden Betrieb zur Erkennung von zufälligen Fehlern; und
- Sichere Beherrschung von erkannten Fehlern und Übergang in einen vorher als sicher definierten Zustand.

Folgende Normen gehören zu den wichtigsten, die funktionale Sicherheit betreffend:
EN ISO 13849: Sicherheit von Maschinen - Sicherheitsbezogene Teile von Steuerungen EN/IEC 61508: Funktionale Sicherheit sicherheitsbezogener elektrischer/elektronischer/programmierbarer elektronischer Systeme

EN/IEC 62061: Sicherheit von Maschinen - Funktionale Sicherheit sicherheitsbezogener elektrischer, elektronischer und programmierbar elektronischer Steuerungssysteme

Einfache Sicherheitsfunktionen wie Schutzfeldfunktionen oder sichere Messdatenerzeugung sind Stand der Technik für optische Sicherheitssensoren. Diese einfachen Sicherheitsfunktionen haben den Vorteil der einfachen Integrierbarkeit und einfachen Integration in Embedded-Systeme. Hierbei führen die Sicherheitssensoren die Funktionen selbst aus und reduzieren die Information in einer integrierten Datenverarbeitungskette meistens auf binäre Informationen. Diese werden im Anschluss von einer Sicherheitssteuerung verarbeitet und zur Absicherung einer gefährlichen Maschine verwendet.

Die Verarbeitung der Sensordaten und die Erzeugung einer Sicherheitsentscheidung wird üblicherweise vollständig im Sensor ausgeführt, so dass nur ein einfaches Schaltsignal an die Steuerung weitergegeben werden muss.

Zudem gibt es die Möglichkeit, die Schaltsignale mehrerer Sensoren mit einfachen logischen Operationen in einer Sicherheitssteuerung zusammen zu führen und auf einem übergeordneten System neue Sicherheitsfunktionen zu realisieren.

Die einzelnen Schritte der Erzeugung sicherheitstechnisch verwendbarer Informationen sind in beiden Fällen entweder ausschließlich auf dem Sensor oder auf der Steuerung realisiert.

Komplexe Anwendungsgebiete beispielsweise eine Mensch-Roboter-Kollaboration (kurz: MRK) oder autonome Fahrzeuge benötigen jedoch hochwertigere Sicherheitsfunktionen und brauchen als Grundlage für solche Funktionen häufig Bilddaten oder besser noch 3D-Bilddaten.

Beispiele sind die Objektlokalisierung mit der Fragestellung, wo sich das Objekt im Sichtbereich befindet, die Objektverfolgung mit der Fragestellung, entlang welcher Trajektorie bewegt sich ein zu detektierendes Objekt und die Objektklassifikation mit der Fragestellung, handelt es sich bei dem detektierten Objekt um einen Menschen oder nicht?

Diese gestiegene Komplexität der Sicherheitsfunktion allein auf einem Sensor zu realisieren ist derzeit nicht möglich, da der Leistungsfähigkeit interner Berechnungen auf dem Echtzeitsystem durch Abwärme, Kosten und Baugröße enge Grenzen gesetzt sind. Je komplexer die Sicherheitsfunktion ist, desto mehr Aufwand muss in Diagnose- und Fehlerbeherrschungsmechanismen gesteckt werden. Des Weiteren sind klassische Ansätze zu Fehlerbeherrschung wie zum Beispiel die redundante oder die redundant, diversitäre Ausführung der Funktion auf dem Sensor für sehr anspruchsvolle Funktionen aus den gleichen Gründen nur schwer umsetzbar.

Die Umsetzung der hochwertigen Sicherheitsfunktion auf einer Steuerung der Automatisierungstechnik ist zwar im Hinblick auf die zur Verfügung stehende Rechenleistung und Möglichkeiten zur Abwärmedissipation möglich, aber derzeit gibt es keine Sicherheitssteuerungen, die in der Lage wären, so anspruchsvolle Sicherheitsfunktionen auszuführen.

Die EP 3 709 106 B1 offenbart ein Sicherheitssystem zum Absichern einer Maschine, das mindestens einen sicheren Sensor zum Erzeugen von sicheren Daten aufweist, wobei der sichere Sensor auch nicht sichere Daten erzeugt und/oder ein nicht sicherer Sensor zum Erzeugen nicht sicherer Daten vorgesehen ist, wobei das Sicherheitssystem weiterhin eine nicht sichere Auswertungseinheit zum Verarbeiten der nicht sicheren Daten sowie eine sichere Auswertungseinheit aufweist, die dafür ausgebildet ist, die nicht sichere Auswertungseinheit zu testen, indem ein Auswertungsergebnis des Verarbeitens der nicht sicheren Daten anhand der sicheren Daten überprüft wird. Dabei weisen die sicheren Daten im Vergleich zu dem Auswertungsergebnis eine geringere Genauigkeit auf und/oder sind seltener verfügbar.

Eine Aufgabe der Erfindung besteht darin, ein verbessertes Sicherheitssystem zur Verfügung zu stellen.

Die Aufgabe wird nach dem Sicherheitssystem gemäß dem unabhängigen Patentanspruch 1 gelöst.

Die Aufgabe wird weiterhin nach einem Verfahren gemäß dem unabhängigen Patentanspruch 11 gelöst.

Die vorliegende Erfindung gibt an, wie mit einer gestaffelten Sicherheitsarchitektur unter Einbeziehung einer nachgelagerten programmierbaren Steuerung bzw. Standardsteuerung im Systemverbund eine redundante, diversitäre Datenverarbeitung realisiert werden kann und so komplexe Sicherheitsfunktionen mit geringem Zusatzaufwand verfügbar werden.

Gemäß der Erfindung handelt es sich um ein Sicherheitssystem bzw. eine Sicherheitsarchitektur, die es erlaubt, mit einkanalig ausgeführten Sensorsystemen und einer einkanaligen, programmierbaren Steuerung mit Hilfe einer gestaffelt redundant-diversitären Architektur komplexe Sicherheitsfunktionen zu realisieren, ohne den großen Zusatzaufwand mehrkanaliger Architektur betreiben zu müssen. Die Erfindung geht von der Idee aus, dass es für komplexe Sicherheitsfunktionen vorteilhaft ist, die Prinzipien der Redundanz und Diversität auszunutzen. Die Erfindung bietet eine Lösung, wie diese Prinzipien verwendet werden können, indem die Redundanz und Diversität längs, also der Reihe nach auf die Kette Sensorsystem und programmierbare Steuerung verteilt wird.

Der Kern der Erfindung ist die gestaffelte Verwendung von diversitärer Redundanz in dem Sicherheitssystem mit dem Sensorsystem und der programmierbaren Steuerung. Gestaffelt bedeutet hier, dass beide Komponenten, also das Sensorsystem und die programmierbare Steuerung in dieser sequenziellen Datenverarbeitungskette die Sicherheitsfunktion jeweils einkanalig ausführen und in einem nachgelagerten Verarbeitungsschritt verglichen wird, ob die Resultate in vorgegebenen Grenzen übereinstimmen. Dadurch können beide Elemente, also das Sensorsystem und die programmierbare Steuerung jeweils einkanalig ausgeführt sein und der Aufwand für doppelte Hardware oder die Nachteile von lokal anfallender Abwärme vermieden werden.

Das Sensorsystem leitet hierzu die Messdaten, die das Sensorsystem selbst für die Ausführung der Sicherheitsfunktion verwendet, zusätzlich an die programmierbare Steuerung weiter.

Das Sensorsystem weist Vorrichtungen, Implementierungen bzw. Maßnahmen zur Vermeidung von Fehlern gemeinsamer Ursache ("Common Cause Failures") auf, da die Datengrundlage, welche die programmierbare Steuerung für die Ermittlung des Funktionsergebnisses verwendet, nicht unabhängig vom Sensorsystem ist.

Die Ergebnisse der redundant-diversitären Funktionsauswertung werden nach den Prinzipien der funktionalen Sicherheit verglichen und entsprechend in ein sicherheitsrelevantes Ausgangssignal bzw. sichere Ausgangssignale gebildet.

Vorteilhaft bezieht sich die Diversität der Funktionsausführung nicht nur auf die Komponente der Ausführung, also das Sensorsystem und die programmierbare Steuerung, sondern beispielsweise auch auf die verwendete Hardware, z.B. einen eingebetteten (engl. embedded) Sensorsystem-Prozessor oder einen Industrie-PC für die programmierbare Steuerung, das verwendete Betriebssystem und den verwendeten Algorithmus der Funktionen. Hier kann optional auch ein Auswerteverfahren bzw. ein System der künstlichen Intelligenz (Kl) oder Auswerteverfahren bzw. ein System des maschinellen Lernens zum Einsatz kommen.

In Weiterbildung der Erfindung ist in der Vergleichseinheit mindestens ein Toleranzbereich vorgesehen, wobei die Vergleichseinheit ausgebildet ist, die ersten Ergebnissignale und die zweiten Ergebnissignale unter Berücksichtigung des Toleranzbereiches miteinander zu vergleichen und sichere Ausgangssignale generiert.

Es kann somit eine tolerante Definition verwendet werden, welche zulässige Abweichungen der beiden Funktionsresultate als übereinstimmend im Gesamtergebnis betrachtet. Die Diversität wird im Allgemeinen nicht zu hundert Prozent deckungsgleichen Resultaten der beiden Funktionspfade führen.

In Weiterbildung der Erfindung weist die programmierbare Steuerung die Vergleichseinheit auf.

Mit dieser Vergleichseinheit ist es dann auch möglich, die abschließende Vergleichsoperation auf der programmierbaren Steuerung selbst auszuführen. Dieses Prüfen einer Erwartungshaltung ist ein weiteres wirkungsvolles Prinzip der Fehlerbeherrschung.

In Weiterbildung der Erfindung weist das Sensorsystem einen Testdatengenerator auf.

Gemäß der Weiterbildung kann das Sensorsystem mittels des Testdatengenerators zusätzlich oder alternierend Testdaten in Form eines Messdatensatzes und dem zugehörigen Funktionsergebnis in die weitere Verarbeitungskette einspeisen. Damit lassen sich weitere Fehler, wie zum Beispiel die Funktionsausführung auf der programmierbaren Steuerung oder der Vergleich der Ergebnisse im Betrieb vermeiden bzw. aufdecken.

In Weiterbildung der Erfindung ist das Sensorsystem ein 3D-Bildsensorsystem.

Durch die Architektur gemäß der Erfindung ist es zum Beispiel möglich, mit einer einkanaligen 3D-Sicherheitskamera und einer leistungsfähigen programmierbaren Steuerung bzw. programmierbaren Standardsteuerung komplexe Sicherheitsfunktionen wie beispielsweise Objektlokalisierung, Objekttracking, Objektklassifikation zu realisieren.

Die auszuführende Sicherheitsfunktion realisiert durch die erste Steuer- und Auswerteeinheit und die zweite Steuer- und Auswerteinheit erhält als Input die 3D-Bilddaten (und ggf. weitere Sensordaten) des 3D-Bildsensorsystem und ermittelt in diesen Daten die Position relevanter Objekte.

Eine Unterscheidung von Vordergrund und Hintergrundpixeln kann in einem Vorverarbeitungsschritt auf Basis von Schutzfeldern oder Referenzzonen erfolgen.

Zu jedem ermittelten Objekt werden Angaben zur Position und ggf. auch zu Größe und Bewegungsrichtung erzeugt. Das kann zum Beispiel mit einer Hüll-Box/Umrandungs-Box (Bounding Box) und einem Bewegungsvektor erfolgen.

Die Funktion wird einerseits auf dem 3D-Bildsensorsystem selbst ausgeführt und andererseits auf der programmierbaren Steuerung aber auf Basis derselben Sensordaten. Die Sensordaten werden der programmierbaren Steuerung über einen Messdatenstrom zur Verfügung gestellt, der beispielsweise mit zusätzlichen Maßnahmen gegen Übertragungsfehler abgesichert ist.

Zusätzlich ergreift das Sensorsystem beispielsweise Maßnahmen zur Vermeidung von Fehlern gemeinsamer Ursache. Beispielsweise die Prüfung der einwandfreien Funktion der Messdatengewinnung, Funktionsprüfungen des Sensorsystems, Prüfsummen/CRCs für interne und externe Datenübertragungen, Einspeisung von Testdaten. Damit können Fehler gemeinsamer Ursache vermieden werden. Die Ausführung der ersten Sicherheitsfunktion im Sensorsystem selbst ist jedoch nicht intern im Sensorsystem geprüft. Diese Validierung erfolgt nachgelagert durch den Vergleich der äquivalenten zweiten Sicherheitsfunktion auf der programmierbaren Steuerung und den Vergleich.

Die programmierbare Steuerung selbst verwendet sehr wenige Sicherheitsmaßnahmen. Vor allem die Überprüfung mitgelieferter Plausibilisierungsinformationen der Messdaten des Sensorsystems erfolgt in der programmierbaren Steuerung. Da die programmierbare Steuerung im Allgemeinen sehr viel leistungsfähiger als das Sensorsystem selbst ist, können hier aufwändigere Algorithmen oder sogar neuronale Netze zur Auswertung der 3D-Bilddaten eingesetzt werden. Es ist zum Beispiel vorgesehen, dass hier eine pixelbasierte Segmentierung der detektierten Objekte vorgenommen wird.

Die Beherrschung von Fehlern gemeinsamer Ursache ist ein wichtiger Baustein des vorliegenden Sicherheitskonzepts. Ein möglicher Fehler dieser Art kann der Verlust oder die Verfälschung der Sensordaten durch Fehler im Sensorsystem oder durch Beeinflussung durch äußere Einwirkungen sein. Auch die Übertragung von Daten vom Sensorsystem zu der programmierbaren Steuerung ist in diesem Zusammenhang relevant.

Aus diesem Grund werden bereits im Sensorsystem Maßnahmen zur Beherrschung oder Aufdeckung dieser Fehler integriert. Das 3D-Bildsensorsystem enthält solche Maßnahmen beispielsweise mittels integrierten Sicherheitsfunktionen.

Das 3D-Bildsensorsystem bietet die Möglichkeit, zusätzlich zu einfachen Sicherheitsfunktionen, wie der Schutzfeldauswertung, hochwertigere Funktionen bereitzustellen. Die Datenfülle und Qualität erlaubt es prinzipiell, spezifischere und hochwertigere Informationen aus den Sensordaten zu extrahieren. Anstelle der einfachen binären Information wie beispielsweise, dass sich ein Objekt im Schutzbereich befindet, kann zum Beispiel die genaue Position, Größe und Bewegungsrichtung aus den 3D-Bilddaten ermittelt werden. Diese Informationen sind für autonome Maschinen und Anwendungen, wie die Kollaboration von Menschen und Robotern sehr wichtig.

Weiterhin sind die Unterscheidung von Menschen und anderen Objekten sehr nützlich für die Optimierung produktiver Automatisierungsabläufe.

Wenn Maschinen jedoch im Rahmen von Automatisierungsprozessen (Maschinen agieren selbstständig nach festen Regeln) oder Autonomisierungsprozessen (Maschinen entscheiden selbstständig in einem flexiblen/komplexen Umfeld nach festen Zielsetzungen) selbstständig handeln sollen, werden hohe Anforderungen an die Sicherheit der Abläufe gestellt. Alle Elemente der Maschinensteuerung vom Sensor bis zum Aktor müssen nach den Vorgaben der funktionalen Sicherheit ausgelegt sein und betrieben werden.

In Weiterbildung der Erfindung weist die programmierbare Steuerung einen Signalausgang zur Anforderung von Testdaten auf und das Sensorsystem weist einen Signaleingang auf zur Anforderung von Testdaten, wobei der Signalausgang mit dem Signaleingang verbunden ist.

Damit ist ein Mechanismus vorgesehen, mit dem die programmierbare Steuerung über beispielsweise einen digitalen Eingang am Sensorsystem solche Testdatenpaare anfordert. Dann lassen sich zusätzliche Fehler des Sensorsystems beherrschen und die Anforderungen an das Sensorsystem selbst reduzieren.

In Weiterbildung der Erfindung ist die programmierbare Steuerung ausgebildet, basierend auf dem Vergleich der ersten Ergebnissignale und der zweiten Ergebnissignale der Vergleichseinheit ein Plausibilitätsmaß auszugeben.

Damit kann das Sicherheitssystem neben dem verglichenen Funktionsresultat und der Entscheidung, ob es sicherheitstechnisch verwendbar ist, noch ein Plausibilitätsmaß ausgeben. Dieses Plausibilitätsmaß liefert Informationen über den Grad der Übereinstimmung der beiden Funktionsergebnisse und kann eine spezifischere Weiterverarbeitung ermöglichen.

Damit erfolgt eine Erzeugung eines Plausibilitätsmaßes zusätzlich zur Ausgangsentscheidung, ob die Ergebnisse übereinstimmen.

In Weiterbildung der Erfindung ist die programmierbare Steuerung ausgebildet, gespeicherte historische Informationen auszuwerten.

Somit kann die programmierbare Steuerung weitere Informationen in die Berechnung des Funktionsresultats einbeziehen. Hier können zum Beispiel Informationen von vergangenen Zeitpunkten oder Informationen aus einem Konfigurationsprozess einfließen.

In Weiterbildung der Erfindung ist die programmierbare Steuerung ausgebildet, ein weiteres Sensorsystem auszuwerten, wobei das weitere Sensorsystem ausgebildet ist, Sensordaten an die zweite Steuer- und Auswerteeinheit zu übermitteln, wobei die zweite Steuer- und Auswerteeinheit ausgebildet ist, Sensordaten von dem Sensor des weiteren Sensorsystems auszuwerten und dritte Ergebnissignale zu bilden.

Somit kann auch auf Sensorsysteme zurückgegriffen werden, die keine spezielle Sicherheitsarchitektur haben und nicht nach den Regeln der funktionalen Sicherheit entwickelt wurden.

Beispielsweise ist die Verwendung von Ki-basierten Funktionen in der zweiten Steuer- und Auswerteinheit vorgesehen. Jedoch können auch in der ersten Steuer- und Auswerteeinheit KI-basierte Funktionen vorgesehen sein.

In Weiterbildung der Erfindung weist eine Sicherheitssteuerung die Vergleichseinheit auf.

Beispielsweise ist eine zusätzliche Sicherheitssteuerung für den Vergleich der beiden Ergebnisse vorgesehen, wobei die Sicherheitssteuerung eine Vergleichseinheit aufweist, wobei die Vergleichseinheit die ersten Ergebnissignale und die zweiten Ergebnissignale miteinander vergleicht und sichere Ausgangssignale generiert. In diesem Fall weist die programmierbare Steuerung die zweite Steuer- und Auswerteeinheit auf und die Vergleichseinheit ist in der Sicherheitssteuerung angeordnet.

Beispielsweise können eine oder mehrere 3D-Bildsensorsysteme vorgesehen sein, eine performante programmierbare Steuerung und ggf. eine zusätzliche Sicherheitssteuerung.

Beispielsweise werden beide Funktionsresultate in Form einfacher Integer-Positionsdaten an eine nachfolgende Sicherheitssteuerung zum Vergleich weitergegeben. Für diesen Vergleich weist die Sicherheitssteuerung alle sicherheitstechnisch erforderlichen Mechanismen auf.

Damit ist ein Mechanismus vorgesehen, mit dem die programmierbare Steuerung oder die folgende Sicherheitssteuerung über beispielsweise einen digitalen Eingang am Sensorsystem solche Testdatenpaare anfordert. Dann lassen sich zusätzliche Fehler des Sensorsystems beherrschen und die Anforderungen an das Sensorsystem selbst reduzieren.

Beispielsweise können die Sensorsysteme durch Laserscanner, 2D-Kamerasysteme, Lichtgitter, Radarsensoren oder ähnliche Sensorsysteme gebildet sein.

Beispielsweise kann die programmierbare Steuerung auch durch eine Maschinensteuerung, zum Beispiel eine Robotersteuerung oder ein Fahrzeugrechner gebildet sein.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis Figur 4 und Figur 6: jeweils ein Sicherheitssystem;
- Figur 5: 3D-Bilddaten.

In den nachfolgenden Figuren sind identische Teile mit identischen Bezugszeichen versehen.

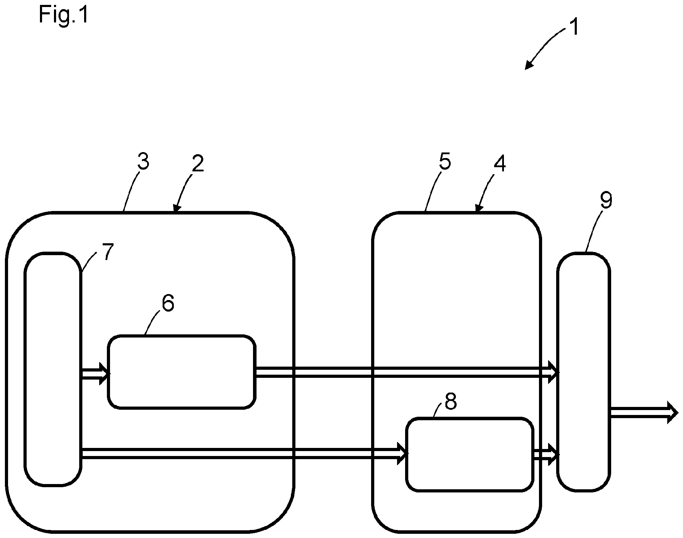

Figur 1 zeigt ein Sicherheitssystem 1 mit mindestens einem Sensorsystem 2 in einem ersten Gehäuse 3 und mindestens einer programmierbaren Steuerung 4 in einem zweiten Gehäuse 5, wobei das Sensorsystem 2 eine erste Steuer- und Auswerteeinheit 6 aufweist, wobei die erste Steuer- und Auswerteeinheit 6 ausgebildet ist, Sensordaten von dem Sensor 7 des Sensorsystems 2 auszuwerten und erste Ergebnissignale zu bilden, die programmierbare Steuerung 4 eine zweite Steuer- und Auswerteeinheit 8 aufweist, wobei das Sensorsystem 2 ausgebildet ist, Sensordaten an die zweite Steuer- und Auswerteeinheit 8 zu übermitteln, wobei die zweite Steuer- und Auswerteeinheit 8 ausgebildet ist, Sensordaten von dem Sensor 7 des Sensorsystems 2 auszuwerten und zweite Ergebnissignale zu bilden, wobei eine Vergleichseinheit 9 vorgesehen ist, wobei die Vergleichseinheit 9 ausgebildet ist, die ersten Ergebnissignale und die zweiten Ergebnissignale miteinander zu vergleichen und sichere Ausgangssignale generiert.

Gemäß der Erfindung handelt es sich um ein Sicherheitssystem 1 bzw. eine Sicherheitsarchitektur, die es erlaubt, mit einkanalig ausgeführten Sensorsystemen 2 und einer einkanaligen, programmierbaren Steuerung 4 mit Hilfe einer gestaffelt redundant-diversitären Architektur komplexe Sicherheitsfunktionen zu realisieren, ohne den großen Zusatzaufwand mehrkanaliger Architektur betreiben zu müssen. Die Redundanz und Diversität ist längs, also der Reihe nach auf die Kette Sensorsystem 2 und programmierbare Steuerung 4 verteilt.

Der Kern ist die gestaffelte Verwendung von diversitärer Redundanz in dem Sicherheitssystem 1 mit dem Sensorsystem 2 und der programmierbaren Steuerung 4. Gestaffelt bedeutet hier, dass beide Komponenten, also das Sensorsystem 2 und die programmierbare Steuerung 4 in dieser sequenziellen Datenverarbeitungskette die Sicherheitsfunktion jeweils einkanalig ausführen und in einem nachgelagerten Verarbeitungsschritt in der Vergleichseinheit 9 verglichen wird, ob die Resultate in vorgegebenen Grenzen übereinstimmen. Dadurch können beide Elemente, also das Sensorsystem 2 und die programmierbare Steuerung 4 jeweils einkanalig ausgeführt sein.

Das Sensorsystem 2 leitet hierzu die Messdaten, die das Sensorsystem 2 selbst für die Ausführung der Sicherheitsfunktion verwendet, zusätzlich an die programmierbare Steuerung 4 weiter.

Das Sensorsystem 2 weist Vorrichtungen, Implementierungen bzw. Maßnahmen zur Vermeidung von Fehlern gemeinsamer Ursache ("Common Cause Failures") auf, da die Datengrundlage, welche die programmierbare Steuerung 4 für die Ermittlung des Funktionsergebnisses verwendet, nicht unabhängig vom Sensorsystem 2 ist.

Die Ergebnisse der redundant-diversitären Funktionsauswertung werden nach den Prinzipien der funktionalen Sicherheit verglichen und entsprechend ein sicherheitsrelevantes Ausgangssignal bzw. sichere Ausgangssignale gebildet.

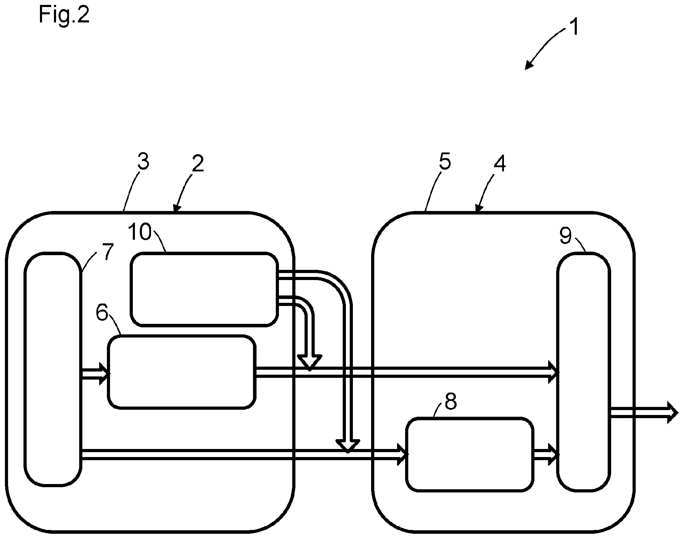

Gemäß Figur 2 weist die programmierbare Steuerung 4 die Vergleichseinheit 9 auf.

Mit dieser Maßnahme ist es dann auch möglich, die abschließende Vergleichsoperation der Vergleichseinheit 9 auf der programmierbaren Steuerung 4 selbst auszuführen. Dieses Prüfen einer Erwartungshaltung ist ein weiteres wirkungsvolles Prinzip der Fehlerbeherrschung.

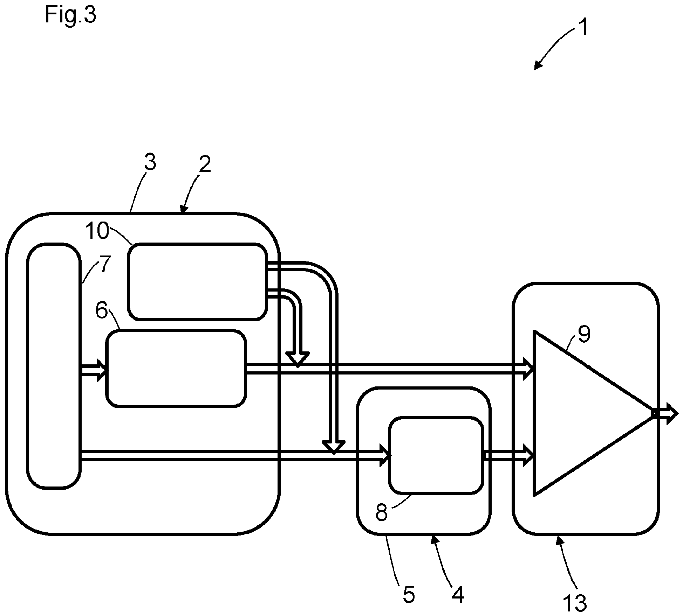

Gemäß Figur 3 weist eine Sicherheitssteuerung 13 die Vergleichseinheit 9 auf.

Beispielsweise ist die zusätzliche Sicherheitssteuerung 13 für den Vergleich der beiden Ergebnisse vorgesehen, wobei die Sicherheitssteuerung 13 die Vergleichseinheit 9 aufweist, wobei die Vergleichseinheit 9 die ersten Ergebnissignale und die zweiten Ergebnissignale miteinander vergleicht und sichere Ausgangssignale generiert. In diesem Fall weist die programmierbare Steuerung 4 die zweite Steuer- und Auswerteeinheit 8 auf und die Vergleichseinheit 9 ist in der Sicherheitssteuerung 13 angeordnet.

Gemäß Figur 2 weist das Sensorsystem 2 einen Testdatengenerator 10 auf.

Damit kann das Sensorsystem 2 mittels des Testdatengenerators 10 zusätzlich oder alternierend Testdaten in Form eines Messdatensatzes und dem zugehörigen Funktionsergebnis in die weitere Verarbeitungskette einspeisen. Damit lassen sich weitere Fehler, wie zum Beispiel die Funktionsausführung auf der programmierbaren Steuerung 4 oder der Vergleich der Ergebnisse im Betrieb vermeiden bzw. aufdecken.

Mit dieser Maßnahme ist es dann auch möglich, die abschließende Vergleichsoperation auf der programmierbaren Steuerung 4 selbst auszuführen. Dieses Prüfen einer Erwartungshaltung ist ein weiteres wirkungsvolles Prinzip der Fehlerbeherrschung.

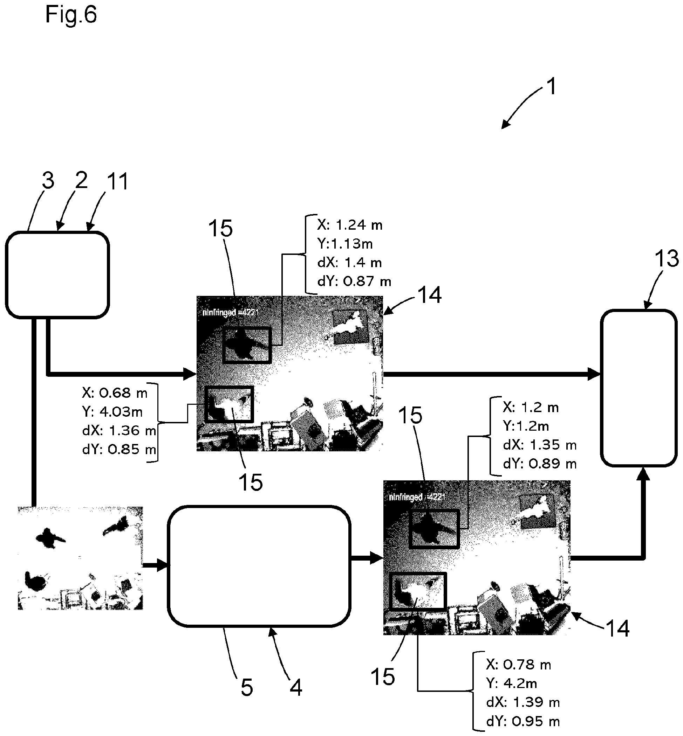

Gemäß Figur 6 ist das Sensorsystem 2 ein 3D-Bildsensorsystem 11.

Beispielsweise ist es möglich, mit einem 3D-Bildsensorsystem 11 bzw. einer einkanaligen 3D-Sicherheitskamera und einer leistungsfähigen programmierbaren Steuerung 4 bzw. programmierbaren Standardsteuerung 4 komplexe Sicherheitsfunktionen wie beispielsweise Objektlokalisierung, Objekttracking, Objektklassifikation zu realisieren.

Die auszuführende Sicherheitsfunktion, realisiert durch die erste Steuer- und Auswerteeinheit 6 und die zweite Steuer- und Auswerteinheit 8 erhält als Input die 3D-Bilddaten 14 des 3D-Bildsensorsystems 11 und ermittelt in diesen Daten die Position relevanter Objekte 15.

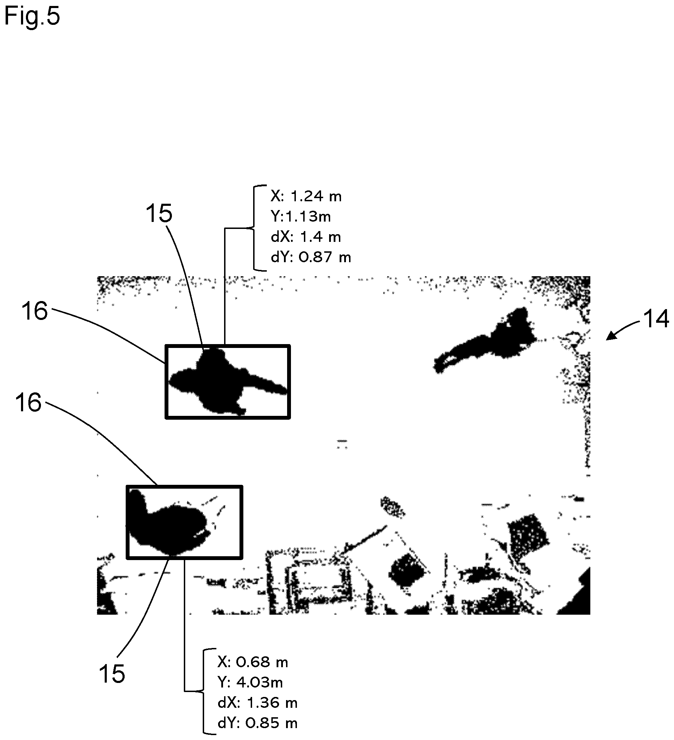

Die Bilddaten 14 aus Figur 6 sind in Figur 5 näher dargestellt. Eine Unterscheidung von Vordergrund und Hintergrundpixeln kann in einem Vorverarbeitungsschritt auf Basis von Schutzfeldern oder Referenzzonen erfolgen.

Zu jedem ermittelten Objekt 15 werden Angaben zur Position und ggf. auch zu Größe und Bewegungsrichtung erzeugt. Dies ist in Figur 5 und Figur 6 mit den Werten hinter der geschweiften Klammer dargestellt. Das kann zum Beispiel mit einer Hüll-Box/Umrandungs-Box 16 (Bounding Box) und einem Bewegungsvektor erfolgen.

Die Funktion wird einerseits auf dem 3D-Bildsensorsystem 11 gemäß Figur 6 selbst ausgeführt und andererseits auf der programmierbaren Steuerung 4, aber auf Basis derselben Sensordaten. Die Sensordaten werden der programmierbaren Steuerung 4 über einen Messdatenstrom zur Verfügung gestellt, der beispielsweise mit zusätzlichen Maßnahmen gegen Übertragungsfehler abgesichert ist.

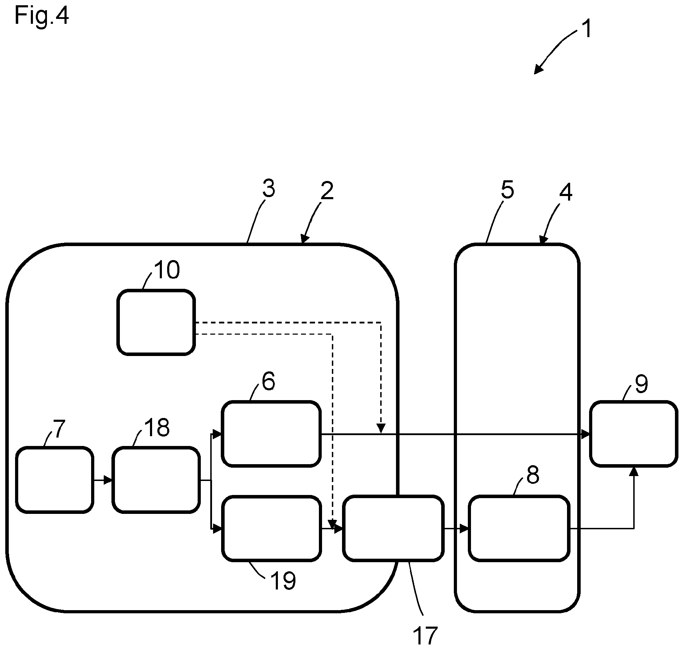

Zusätzlich ergreift das Sensorsystem 2 gemäß Figur 4 beispielsweise Maßnahmen zur Vermeidung von Fehlern gemeinsamer Ursache. Beispielsweise die Prüfung der einwandfreien Funktion der Messdatengewinnung des Sensors 7 und einer Vorverarbeitung 18 der Messdaten, Funktionsprüfungen des Sensorsystems 2, Prüfsummen/CRCs für interne und externe Datenübertragungen 17, Einspeisung von Testdaten durch den Testdatengenerator 10 und einer Bereitstellung der Sensordaten 19. Damit können Fehler gemeinsamer Ursache vermieden werden. Die Ausführung der ersten Sicherheitsfunktion im Sensorsystem 2 selbst ist jedoch nicht intern im Sensorsystem 2 geprüft. Diese Validierung erfolgt nachgelagert durch den Vergleich der äquivalenten zweiten Sicherheitsfunktion auf der programmierbaren Steuerung 4 und den Vergleich in der Vergleichseinheit.

Die programmierbare Steuerung 4 selbst verwendet sehr wenige Sicherheitsmaßnahmen. Vor allem die Überprüfung mitgelieferter Plausibilisierungsinformationen der Messdaten des Sensorsystems 2 erfolgt in der programmierbaren Steuerung 4.

Da die programmierbare Steuerung 4 im Allgemeinen sehr viel leistungsfähiger als das Sensorsystem 2 selbst ist, können hier aufwändigere Algorithmen oder sogar neuronale Netze zur Auswertung der 3D-Bilddaten 14 eingesetzt werden. Es ist zum Beispiel vorgesehen, dass hier eine pixelbasierte Segmentierung der detektierten Objekte vorgenommen wird.

Die Beherrschung von Fehlern gemeinsamer Ursache ist ein wichtiger Baustein des vorliegenden Sicherheitskonzepts. Ein möglicher Fehler dieser Art kann der Verlust oder die Verfälschung der Sensordaten durch Fehler im Sensorsystem 2 oder durch Beeinflussung durch äußere Einwirkungen sein. Auch die Übertragung von Daten durch die Datenübertragung 17 vom Sensorsystem 2 zu der programmierbaren Steuerung 4 ist in diesem Zusammenhang relevant.

Aus diesem Grund werden bereits im Sensorsystem 2 Maßnahmen zur Beherrschung oder Aufdeckung dieser Fehler integriert. Das 3D-Bildsensorsystem 11 enthält solche Maßnahmen beispielsweise mittels integrierten Sicherheitsfunktionen.

Das 3D-Bildsensorsystem 11 bietet die Möglichkeit, zusätzlich zu einfachen Sicherheitsfunktionen, wie der Schutzfeldauswertung, hochwertigere Funktionen bereitzustellen. Die Datenfülle und Qualität erlaubt es prinzipiell, spezifischere und hochwertigere Informationen aus den Sensordaten zu extrahieren. Anstelle der einfachen binären Information wie beispielsweise, dass sich ein Objekt im Schutzbereich befindet, kann zum Beispiel die genaue Position, Größe und Bewegungsrichtung aus den 3D-Bilddaten 14 ermittelt werden. Diese Informationen sind für autonome Maschinen und Anwendungen wie die Kollaboration von Menschen und Robotern sehr wichtig.

Weiterhin sind die Unterscheidung von Menschen und anderen Objekten sehr nützlich für die Optimierung produktiver Automatisierungsabläufe.

Wenn Maschinen jedoch im Rahmen von Automatisierungsprozessen (Maschinen agieren selbstständig nach festen Regeln) oder Autonomisierungsprozessen (Maschinen entscheiden selbstständig in einem flexiblen/komplexen Umfeld nach festen Zielsetzungen) selbstständig handeln sollen, werden hohe Anforderungen an die Sicherheit der Abläufe gestellt. Alle Elemente der Maschinensteuerung vom Sensor bis zum Aktor müssen nach den Vorgaben der funktionalen Sicherheit ausgelegt sein und betrieben werden.

Beispielsweise weist die programmierbare Steuerung 4 einen Signalausgang zur Anforderung von Testdaten auf und das Sensorsystem 2 weist einen Signaleingang auf zur Anforderung von Testdaten, wobei der Signalausgang mit dem Signaleingang verbunden ist.

Damit ist ein Mechanismus vorgesehen, mit dem die programmierbare Steuerung 4 über beispielsweise einen digitalen Eingang am Sensorsystem solche Testdatenpaare anfordert. Dann lassen sich zusätzliche Fehler des Sensorsystems 2 beherrschen und die Anforderungen an das Sensorsystem 2 selbst reduzieren.

Beispielsweise ist die programmierbare Steuerung 4 ausgebildet, basierend auf dem Vergleich der ersten Ergebnissignale und der zweiten Ergebnissignale der Vergleichseinheit 9 ein Plausibilitätsmaß auszugeben.

Damit kann das Sicherheitssystem 1 neben dem verglichenen Funktionsresultat und der Entscheidung, ob es sicherheitstechnisch verwendbar ist, noch ein Plausibilitätsmaß ausgeben. Dieses Plausibilitätsmaß liefert Informationen über den Grad der Übereinstimmung der beiden Funktionsergebnisse und kann eine spezifischere Weiterverarbeitung ermöglichen.

Damit erfolgt eine Erzeugung eines Plausibilitätsmaßes zusätzlich zur Ausgangsentscheidung, ob die Ergebnisse übereinstimmen.

Beispielsweise ist die programmierbare Steuerung 4 ausgebildet, gespeicherte historische Informationen auszuwerten.

Somit kann die programmierbare Steuerung 4 weitere Informationen in die Berechnung des Funktionsresultats einbeziehen. Hier können zum Beispiel Informationen von vergangenen Zeitpunkten oder Informationen aus einem Konfigurationsprozess einfließen.

Beispielsweise ist die programmierbare Steuerung 4 ausgebildet, ein weiteres Sensorsystem auszuwerten, wobei das weitere Sensorsystem ausgebildet ist, Sensordaten an die zweite Steuer- und Auswerteeinheit 8 zu übermitteln, wobei die zweite Steuer- und Auswerteeinheit 8 ausgebildet ist, Sensordaten von dem Sensor des weiteren Sensorsystems auszuwerten und dritte Ergebnissignale zu bilden.

Somit kann auch auf Sensorsysteme zurückgegriffen werden, die keine spezielle Sicherheitsarchitektur haben und nicht nach den Regeln der funktionalen Sicherheit entwickelt wurden.

Beispielsweise können eine oder mehrere 3D-Bildsensorsysteme 11 vorgesehen sein, eine performante programmierbare Steuerung 4 und ggf. eine zusätzliche Sicherheitssteuerung 13.

Beispielsweise werden beide Funktionsresultate in Form einfacher Integer-Positionsdaten an eine nachfolgende Sicherheitssteuerung 13 zum Vergleich weitergegeben. Für diesen Vergleich weist die Sicherheitssteuerung 13 die Vergleichseinheit und alle sicherheitstechnisch erforderlichen Mechanismen auf.

Damit ist ein Mechanismus vorgesehen, mit dem die programmierbare Steuerung 4 oder die folgende Sicherheitssteuerung 13 über beispielsweise einen digitalen Eingang am Sensorsystem 2 solche Testdatenpaare anfordert. Dann lassen sich zusätzliche Fehler des Sensorsystems 2 beherrschen und die Anforderungen an das Sensorsystem 2 selbst reduzieren.

Beispielsweise können die Sensorsysteme 2 durch Laserscanner, 2D-Kamerasysteme, Lichtgitter, Radarsensoren oder ähnliche Sensorsysteme gebildet sein.

Beispielsweise kann die programmierbare Steuerung 4 auch durch eine Maschinensteuerung, zum Beispiel eine Robotersteuerung oder ein Fahrzeugrechner gebildet sein.

### Bezugszeichen:

1 Sicherheitssystem
2 Sensorsystem
3 erstes Gehäuse
4 programmierbare Steuerung
5 zweites Gehäuse
6 erste Steuer- und Auswerteeinheit
7 Sensor
8 zweite Steuer- und Auswerteeinheit
9 Vergleichseinheit
10 Testdatengenerator
11 3D-Bildsensorsystem
12 Sensorsystem
13 Sicherheitssteuerung
14 3D-Bilddaten
15 Objekte
16 Hüll-Box/Umrandungs-Box
17 Datenübertragung
18 Vorverarbeitung
19 Bereitstellung der Sensordaten

## Patentansprüche

1. Sicherheitssystem (1) mit mindestens einem Sensorsystem (2) mit mindestens einem Sensor (7) in einem ersten Gehäuse (3) und mindestens einer programmierbaren Steuerung (4) in einem zweiten Gehäuse (5), wobei das Sensorsystem (2) eine erste Steuer- und Auswerteeinheit (6) aufweist, wobei die erste Steuer- und Auswerteeinheit (6) ausgebildet ist, Sensordaten von dem Sensor (7) des Sensorsystems (2) auszuwerten und erste Ergebnissignale zu bilden, die programmierbare Steuerung (4) eine zweite Steuer- und Auswerteeinheit (8) aufweist,
wobei
das Sensorsystem (2) ausgebildet ist, die Sensordaten von dem Sensor (7) des Sensorsystems (2) zusätzlich an die zweite Steuer- und Auswerteeinheit (8) zu übermitteln,
**dadurch gekennzeichnet, dass** die zweite Steuer- und Auswerteeinheit (8) ausgebildet ist, die Sensordaten von dem Sensor (7) des Sensorsystems (2) auszuwerten und zweite Ergebnissignale zu bilden, wodurch eine gestaffelte Sicherheitsarchitektur gebildet ist,
wobei das Sicherheitssystem eine Vergleichseinheit (9) aufweist, wobei die Vergleichseinheit (9) ausgebildet ist, die ersten Ergebnissignale und die zweiten Ergebnissignale miteinander zu vergleichen und sichere Ausgangssignale generiert.

2. Sicherheitssystem (1) nach Anspruch 1, **dadurch gekennzeichnet, dass** in der Vergleichseinheit mindestens ein Toleranzbereich vorgesehen ist, wobei die Vergleichseinheit ausgebildet ist, die ersten Ergebnissignale und die zweiten Ergebnissignale unter Berücksichtigung des Toleranzbereiches miteinander zu vergleichen und sichere Ausgangssignale generiert.

3. Sicherheitssystem (1) nach Anspruch 1, **dadurch gekennzeichnet, dass** die programmierbare Steuerung (4) die Vergleichseinheit (9) aufweist.

4. Sicherheitssystem (1) nach Anspruch 1, **dadurch gekennzeichnet, dass** das Sensorsystem (2) einen Testdatengenerator (10) aufweist.

5. Sicherheitssystem (1) nach einem der vorhergehenden Ansprüche, **dadurch gekennzeichnet, dass** das Sensorsystem (2) ein 3D-Bildsensorsystem (11) ist.

6. Sicherheitssystem (1) nach einem der vorhergehenden Ansprüche, **dadurch gekennzeichnet, dass** die programmierbare Steuerung (4) einen Signalausgang zur Anforderung von Testdaten aufweist und das Sensorsystem (2) einen Signaleingang aufweist zur Anforderung von Testdaten, wobei der Signalausgang mit dem Signaleingang verbunden ist.

7. Sicherheitssystem (1) nach Anspruch 3, **dadurch gekennzeichnet, dass** die programmierbare Steuerung (4) ausgebildet ist, basierend auf dem Vergleich der ersten Ergebnissignale und der zweiten Ergebnissignale der Vergleichseinheit ein Plausibilitätsmaß auszugeben.

8. Sicherheitssystem (1) nach einem der vorhergehenden Ansprüche, **dadurch gekennzeichnet, dass** die programmierbare Steuerung (4) ausgebildet ist, gespeicherte historische Informationen auszuwerten.

9. Sicherheitssystem (1) nach einem der vorhergehenden Ansprüche, **dadurch gekennzeichnet, dass** die programmierbare Steuerung (4) ausgebildet ist, ein weiteres Sensorsystem (12) auszuwerten, wobei das weitere Sensorsystem (12) ausgebildet ist, Sensordaten an die zweite Steuer- und Auswerteeinheit (8) zu übermitteln,
wobei die zweite Steuer- und Auswerteeinheit (8) ausgebildet ist Sensordaten von dem Sensor (7) des weiteren Sensorsystems (12) auszuwerten und dritte Ergebnissignale zu bilden.

10. Sicherheitssystem (1) nach Anspruch 1, **dadurch gekennzeichnet, dass** die Sicherheitssteuerung (4) die Vergleichseinheit (9) aufweist.

11. Verfahren mit einem Sicherheitssystem (1) mit mindestens einem Sensorsystem (2) mit mindestens einem Sensor (7) in einem ersten Gehäuse (3) und mindestens einer programmierbaren Steuerung (4) in einem zweiten Gehäuse (5), wobei das Sensorsystem (2) eine erste Steuer- und Auswerteeinheit (6) aufweist, wobei Sensordaten von dem Sensor (7) des Sensorsystems (2) von der ersten Steuer- und Auswerteeinheit (6) ausgewertet werden und erste Ergebnissignale gebildet werden, die programmierbare Steuerung (4) eine zweite Steuer- und Auswerteeinheit (8) aufweist,
wobei
das Sensorsystem (2) die Sensordaten von dem Sensor (7) des Sensorsystems (2) zusätzlich an die zweite Steuer- und Auswerteeinheit (8) übermittelt,
**dadurch gekennzeichnet, dass** Sensordaten von dem Sensor (7) des Sensorsystems (2) von der zweiten Steuer- und Auswerteeinheit (8) ausgewertet werden und zweite Ergebnissignale gebildet werden, wodurch eine gestaffelte Sicherheitsarchitektur gebildet wird,
wobei das Sicherheitssystem eine Vergleichseinheit (9) aufweist, wobei die Vergleichseinheit (9) die ersten Ergebnissignale und die zweiten Ergebnissignale miteinander vergleicht und sichere Ausgangssignale generiert.

## Claims

1. A safety system (1) having at least one sensor system (2) having at least one sensor (7) in a first housing (3) and at least one programmable controller (4) in a second housing (5), wherein the sensor system (2) has a first control and evaluation unit (6), with the first control and evaluation unit (6) being configured to evaluate sensor data from the sensor (7) of the sensor system (2) and to form first result signals, wherein
the programmable controller (4) has a second control and evaluation unit (8),
wherein
the sensor system (2) is configured to additionally transfer the sensor data from the sensor (7) of the sensor system (2) to the second control and evaluation unit (8),
**characterized in that** the second control and evaluation unit (8) is configured to evaluate the sensor data from the sensor (7) of the sensor system (2) and to form second result signals, whereby a staggered safety architecture is formed,
with the safety system having a comparator unit (9), with the comparator unit (9) being configured to compare the first result signals and the second result signals with one another and generating safe output signals.

2. A safety system (1) in accordance with claim 1, **characterized in that** at least one tolerance range is provided in the comparator unit, with the comparator unit being configured to compare the first result signals and the second result signals with one another while taking account of the tolerance range and generating safe output signals.

3. A safety system (1) in accordance with claim 1, **characterized in that** the programmable controller (4) has the comparator unit (9).

4. A safety system (1) in accordance with claim 1, **characterized in that** the sensor system (2) has a test data generator (10).

5. A safety system (1) in accordance with any one of the preceding claims, **characterized in that** the sensor system (2) is a 3D image sensor system (11).

6. A safety system (1) in accordance with any one of the preceding claims, **characterized in that** the programmable controller (4) has a signal output for requesting test data and the sensor system (2) has a signal input for requesting test data, with the signal output being connected to the signal input.

7. A safety system (1) in accordance claim 3, **characterized in that** the programmable controller (4) is configured to output a plausibility measure based on the comparison of the first result signals and the second result signals of the comparator unit.

8. A safety system (1) in accordance with any one of the preceding claims, **characterized in that** the programmable controller (4) is configured to evaluate stored historical information.

9. A safety system (1) in accordance with any one of the preceding claims, **characterized in that** the programmable controller (4) is configured to evaluate a further sensor system (12), with the further sensor system (12) being configured to transmit sensor data to the second control and evaluation unit (8),
with the second control and evaluation unit (8) being configured to evaluate sensor data from the sensor (7) of the further sensor system (12) and to form third result signals.

10. A safety system (1) in accordance with claim 1, **characterized in that** the a safety controller (4) has the comparator unit (9).

11. A method using a safety system (1) having at least one sensor system (2) having at least one sensor (7) in a first housing (3) and at least one programmable controller (4) in a second housing (5), wherein the sensor system (2) has a first control and evaluation unit (6), with sensor data from the sensor (7) of the sensor system (2) being evaluated by the first control and evaluation unit (6) and first result signals being formed, wherein the programmable controller (4) has a second control and evaluation unit (8),
wherein
the sensor system (2) additionally transmits the sensor data from the sensor (7) of the sensor system (2) to the second control and evaluation unit (8),
**characterized in that** sensor data from the sensor (7) of the sensor system (2) are evaluated by the second control and evaluation unit (8) and second result signals are formed; whereby a staggered safety architecture is formed,
with the safety system having a comparator unit (9), with the comparator unit (9) comparing the first result signals and the second result signals with one another and generating safe output signals.

## Revendications

1. Système de sécurité (1) comprenant au moins un système de capteur (2) avec au moins un capteur (7) dans un premier boîtier (3) et au moins un automate programmable (4) dans un deuxième boîtier (5), le système de capteur (2) comprenant une première unité de commande et d'évaluation (6), la première unité de commande et d'évaluation (6) étant conçue pour évaluer des données de capteur provenant du capteur (7) du système de capteur (2) et pour former des premiers signaux de résultat, l'automate programmable (4) comprenant une deuxième unité de commande et d'évaluation (8),
dans lequel
le système de capteur (2) est conçu pour transmettre les données de capteur provenant du capteur (7) du système de capteur (2) en supplément à la deuxième unité de commande et d'évaluation (8),
**caractérisé en ce que**
la deuxième unité de commande et d'évaluation (8) est conçue pour évaluer les données de capteur provenant du capteur (7) du système de capteur (2) et pour former des deuxièmes signaux de résultat, ce qui constitue une architecture de sécurité échelonnée,
le système de sécurité comprenant une unité de comparaison (9), l'unité de comparaison (9) étant conçue pour comparer entre eux les premiers signaux de résultat et les deuxièmes signaux de résultat et pour générer des signaux de sortie sûrs.

2. Système de sécurité (1) selon la revendication 1,
**caractérisé en ce qu'**au moins une plage de tolérance est prévue dans l'unité de comparaison, l'unité de comparaison étant conçue pour comparer entre eux les premiers signaux de résultat et les deuxièmes signaux de résultat en tenant compte de la plage de tolérance et pour générer des signaux de sortie sûrs.

3. Système de sécurité (1) selon la revendication 1,
**caractérisé en ce que** l'automate programmable (4) comprend l'unité de comparaison (9).

4. Système de sécurité (1) selon la revendication 1,
**caractérisé en ce que** le système de capteur (2) comprend un générateur de données de test (10).

5. Système de sécurité (1) selon l'une des revendications précédentes, **caractérisé en ce que** le système de capteur (2) est un système de capteur d'images 3D (11).

6. Système de sécurité (1) selon l'une des revendications précédentes, **caractérisé en ce que** l'automate programmable (4) présente une sortie de signal pour demander des données de test, et le système de capteur (2) présente une entrée de signal pour demander des données de test, la sortie de signal étant connectée à l'entrée de signal.

7. Système de sécurité (1) selon la revendication 3,
**caractérisé en ce que** l'automate programmable (4) est conçu pour émettre une mesure de plausibilité en se basant sur la comparaison des premiers signaux de résultat et des deuxièmes signaux de résultat de l'unité de comparaison.

8. Système de sécurité (1) selon l'une des revendications précédentes, **caractérisé en ce que** l'automate programmable (4) est conçu pour évaluer des informations historiques mémorisées.

9. Système de sécurité (1) selon l'une des revendications précédentes, **caractérisé en ce que** l'automate programmable (4) est conçu pour évaluer un autre système de capteur (12), l'autre système de capteur (12) étant conçu pour transmettre des données de capteur à la deuxième unité de commande et d'évaluation (8),
la deuxième unité de commande et d'évaluation (8) étant conçue pour évaluer des données de capteur provenant du capteur (7) de l'autre système de capteur (12) et pour former des troisièmes signaux de résultat.

10. Système de sécurité (1) selon la revendication 1,
**caractérisé en ce que** l'automate de sécurité (4) comprend l'unité de comparaison (9).

11. Procédé avec un système de sécurité (1) comprenant au moins un système de capteur (2) avec au moins un capteur (7) dans un premier boîtier (3) et au moins un automate programmable (4) dans un deuxième boîtier (5), le système de capteur (2) comprenant une première unité de commande et d'évaluation (6), des données de capteur provenant du capteur (7) du système de capteur (2) étant évaluées par la première unité de commande et d'évaluation (6), et des premiers signaux de résultat étant formés, l'automate programmable (4) comprenant une deuxième unité de commande et d'évaluation (8),
le système de capteur (2) transmettant les données de capteur provenant du capteur (7) du système de capteur (2) en supplément à la deuxième unité de commande et d'évaluation (8),
**caractérisé en ce que**
les données de capteur provenant du capteur (7) du système de capteur (2) sont évaluées par la deuxième unité de commande et d'évaluation (8), et
des deuxièmes signaux de résultat sont formés, ce qui constitue une architecture de sécurité échelonnée,
le système de sécurité comprenant une unité de comparaison (9), l'unité de comparaison (9) comparant entre eux les premiers signaux de résultat et les deuxièmes signaux de résultat et générant des signaux de sortie sûrs.
